# EUROPÄISCHE PATENTANMELDUNG

(11) **EP 3 443 867 A1**
(43) Veröffentlichungstag der Anmeldung: **20.02.2019**
(21) Anmeldenummer: 18176556.1
(22) Anmeldetag: 07.06.2018
(51) Int. Cl.: A47C 17/48, B60P 3/38

(54) **LIEGEVORRICHTUNG FÜR EIN FAHRZEUG**

(30) Priorität: 15.08.2017 DE 102017118591
(71) Anmelder: Hymer GmbH & Co. KG, 88339 Bad Waldsee (DE)
(72) Erfinder: Rawald, Timo, 88255 Baienfurt (DE)
(74) Vertreter: Otten, Roth, Dobler & Partner mbB Patentanwälte

(57) **Zusammenfassung**

Es wird eine Liegevorrichtung 1 für ein Fahrzeug, insbesondere Wohnmobil, Wohnwagen oder dergleichen vorgeschlagen, umfassend ein erstes Matratzenelement 2 und ein zweites Matratzenelement 3, wobei die Liegevorrichtung 1 in einer Ruhestellung 15 an einer Fahrzeugwand 4 anordenbar und zur Verwendung in eine erste Gebrauchsstellung 14 relativ zu der Fahrzeugwand 4 schwenkbar ist, wobei erfindungsgemäß vorgesehen ist, dass das erste Matratzenelement 2 und das zweite Matratzenelement 3 derart miteinander gelenkig verbunden sind, dass eine Liegefläche 5a mittels einer Klapp- oder Schwenkbewegung der Matratzenelemente 2, 3 zueinander zu einer zweiten Gebrauchsstellung 16 vergrößerbar ist. (Figur 3)

## Beschreibung

Die Erfindung betrifft eine Liegevorrichtung für ein Fahrzeug nach dem Oberbegriff des Anspruchs 1 und ein Fahrzeug nach Anspruch 9.

Liegevorrichtungen für Fahrzeuge sind aus dem Stand der Technik bereits bekannt. Nachteilig ist hierbei insbesondere, dass die bekannten Liegevorrichtungen z.B. fest verbaut sind und somit verminderter Platz im Fahrzeug für anderweitige Verwendung zur Verfügung steht. Auch sind solche Liegevorrichtungen bekannt, die nicht fest verbaut sind und zur Benutzung, d.h. zum Schlafen errichtet werden müssen, wobei hierbei insbesondere nachteilig ist, dass für eine solche Errichtung ein hoher Zeitbedarf erforderlich ist. Nachteilig ist zudem, dass eine derart errichtete Liegevorrichtung in der Regel raumausfüllend konstruiert ist, so dass nach Errichtung gleichermaßen wenig Platz im Fahrzeug zur anderweitigen Verwendung, z.B. zum Sitzen, zur Verfügung steht.

Aufgabe der Erfindung ist es, eine verbesserte Liegevorrichtung für Fahrzeuge bereitzustellen, die flexibel nutzbar und besonders einfach und zügig aufbaubar bzw. abbaubar ist.

Zur Lösung der Aufgabe wird eine Liegevorrichtung für ein Fahrzeug, insbesondere Wohnmobil, Wohnwagen oder dergleichen vorgeschlagen, umfassend ein erstes Matratzenelement und ein zweites Matratzenelement, wobei die Liegevorrichtung in einer Ruhestellung an einer Fahrzeugwand anordenbar und zur Verwendung in eine erste Gebrauchsstellung relativ zu der Fahrzeugwand schwenkbar ist.

Erfindungsgemäß ist vorgesehen, dass das erste Matratzenelement und das zweite Matratzenelement derart miteinander gelenkig verbunden sind, dass eine Liegefläche mittels einer Klapp- oder Schwenkbewegung der Matratzenelemente zueinander zu einer zweiten Gebrauchsstellung vergrößerbar ist.

Die Liegevorrichtung kann somit besonders flexibel verwendet werden, z.B. in der ersten Gebrauchsstellung zum Sitzen bzw. zum Liegen und in der zweiten Gebrauchsstellung zum Liegen. Durch die vergrößerte Liegefläche kann es zudem ermöglicht werden, dass mehrere Personen in der zweiten Gebrauchsstellung Platz auf der Liegevorrichtung vorfinden können, um ggf. gemeinsam darauf zu liegen, insbesondere zu schlafen. Weiterhin ist die erfindungsgemäße Liegevorrichtung besonders einfach und schnell, überdies durch eine einzige Person, errichtbar bzw. abbaubar. Somit ist ein besonders schnelles wechseln zwischen zwei Gebrauchsstellungen und Ruhestellung möglich. Die Klapp- oder Schwenkbewegung erfolgt um eine Achse, die im Wesentlichen in einer Fahrzeuglängsrichtung bzw. parallel zu einer Fahrzeuglängsrichtung angeordnet ist.

Eine besonders bevorzugte Ausgestaltung der Erfindung kann vorsehen, dass in einer ersten Gebrauchsstellung und/oder in einer zweiten Gebrauchsstellung wenigstens ein Bereich einer Oberseite des ersten Matratzenelements wenigstens eine stoffscharnierartige Schicht umfasst, welche zumindest mit einem Bereich einer Stirnseite des zweiten Matratzenelements verbunden, insbesondere verklebt ist.
Dadurch kann auf einfache Art und Weise ermöglicht werden, dass beide Matratzenelemente relativ zueinander verschwenkbar bzw. klappbar sind, wodurch eine entsprechende Liegevorrichtung besonders einfach und schnell errichtet bzw. wieder abgebaut werden kann.

Um einen Austausch z.B. eines einzelnen Matratzenelements, etwa zu Reinigungszwecken, etc. vornehmen zu können, kann eine weitere bevorzugte Ausgestaltung der Erfindung vorsehen, dass das erste Matratzenelement vorzugsweise lösbar mit dem zweiten Matratzenelement, insbesondere über eine Klettverbindung und/oder über einen Reißverschluss und/oder über eine Kederverbindung, verbunden ist. Diese aufgeführten Verbindungsmittel weisen zudem den Vorteil auf, dass sie leicht zu bedienen sind und ggf. auch ausgetauscht bzw. nachgerüstet werden können.

Damit die Liegevorrichtung insbesondere bei Belastung, d.h. bei Nutzung durch Personen ausreichend stabilisiert ist, kann eine weitere vorteilhafte Ausgestaltung der Erfindung vorsehen, dass wenigstens ein Stützmittel vorgesehen ist, auf welchem in einer ersten Gebrauchsstellung und/oder in einer zweiten Gebrauchsstellung wenigstens das zweite Matratzenelement auflegbar ist.

Damit in einer Ruhestellung kein optischer Unterschied einer Fahrzeugwand, an welcher die Liegevorrichtung angeordnet ist, und der Liegevorrichtung besteht und somit eine ästhetisch besonders anspruchsvolle Liegevorrichtung geschaffen werden kann, kann eine weitere vorteilhafte Ausgestaltung der Erfindung vorsehen, dass eine Unterseite des zweiten Matratzenelements eine Dekorschicht vorzugsweise aus Holzwerkstoff umfasst.

Eine weitere vorteilhafte Ausgestaltung der Erfindung kann vorsehen, dass das wenigstens eine Stützmittel horizontal schwenkbar ausgebildet ist. Dadurch kann ein besonders einfach zu bedienendes Stützmittel bereitgestellt werden, welches zudem besonders platzsparend anordenbar ist.

Eine weitere vorteilhafte Ausgestaltung der Erfindung kann vorsehen, dass in einer zweiten Gebrauchsstellung eine Oberseite des ersten Matratzenelements auf wenigstens einem Stützmittel auflegbar ist, wodurch eine Unterseite des ersten Matratzenelements als Liegefläche nutzbar ist.
Es kann somit eine Liegevorrichtung bereitgestellt werden, welche besonders einfach und zügig errichtet bzw. abgebaut werden kann. Weiterhin kann eine Liegevorrichtung bereitgestellt werden, dessen Liegefläche besonders einfach und schnell vergrößerbar bzw. verkleinerbar, d.h. hinsichtlich ihrer Größe besonders flexibel ausgebildet ist.

Die Erfindung betrifft auch ein Fahrzeug, insbesondere Wohnmobil, Wohnwagen oder dergleichen Reise- und/oder Freizeitfahrzeug, bei dem eine erfindungsgemäße Liegevorrichtung vorgesehen ist. Das Fahrzeug kann im Sinne der Erfindung auch als anderweitiges Landfahrzeug und überdies auch als Wasserfahrzeug oder Luftfahrzeug ausgebildet sein.

Nachstehend wird die Erfindung anhand von Zeichnungen näher erläutert. Hierbei zeigt:
- Figur 1:: eine schematische Darstellung einer erfindungsgemäßen Liegevorrichtung in einer Ruhestellung
- Figur 2:: eine schematische Darstellung der in Figur 1 gezeigten Liegevorrichtung in einer ersten Gebrauchsstellung;
- Figur 3:: eine schematische Darstellung der in Figur 1 gezeigten Liegevorrichtung in einer zweiten Gebrauchsstellung.

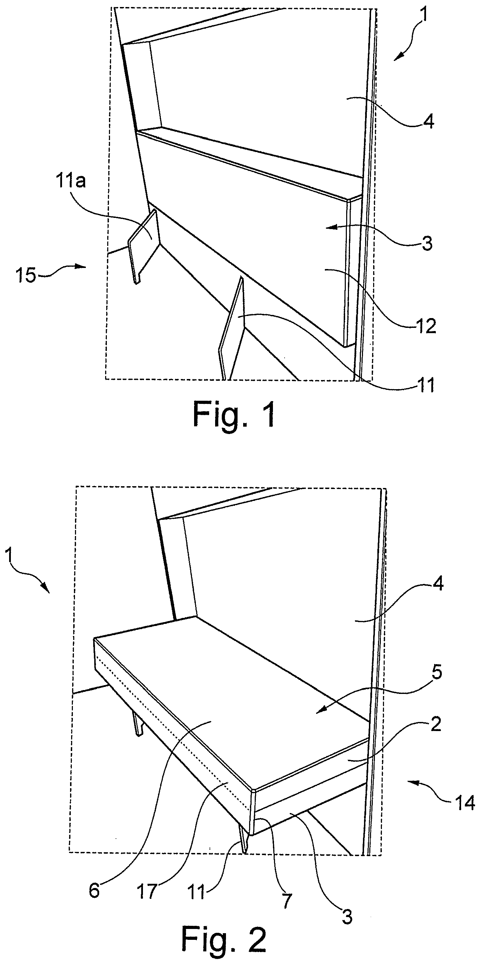

Figur 1 zeigt eine Liegevorrichtung 1 in einer Ruhestellung 15. Die Liegevorrichtung 1 ist an einer Wand, vorliegend an einer Fahrzeugwand 4 eines nicht näher detailliert dargestellten Fahrzeugs angeordnet. Zur Verwendung in einer ersten Gebrauchsstellung 14 ist die Liegevorrichtung 1 relativ zu der Fahrzeugwand 4 schwenkbar (siehe Figur 2). In der Ruhestellung 15 ist die Liegevorrichtung 1 im Wesentlichen bündig in die Fahrzeugwand 4 integriert. So entsteht einerseits ein optisch sehr ansprechender Gesamteindruck der Liegevorrichtung 1 in einem Fahrzeug und andererseits wird ermöglicht, dass in der Ruhestellung 15 Platz im Fahrzeug vorhanden ist, beispielsweise um sich darin aufzuhalten. Der ästhetische Gesamteindruck der Liegevorrichtung 1 wird auch dadurch positiv beeinflusst, dass die Unterseite 12 des zweiten Matratzenelements 3 eine Dekorschicht aus Holzwerkstoff umfasst, entsprechend einer Dekorschicht der Fahrzeugwand 4. In der Figur 1 ist zudem gezeigt, dass die Liegevorrichtung Stützmittel 11, 11a umfasst. Auf diese Stützmittel 11, 11a sind Matratzenelemente in einer ersten Gebrauchsstellung (Figur 2) bzw. in einer zweiten Gebrauchsstellung (nicht gezeigt) auflegbar.

Aus der Figur 2 ist ersichtlich, dass die Liegevorrichtung 1 ein erstes Matratzenelement 2 und ein zweites Matratzenelement 3 umfasst, wobei das erste Matratzenelement 2 und insbesondere dessen Oberseite 6 in der dargestellten ersten Gebrauchsstellung 14 als Liegefläche 5 ausgebildet ist.

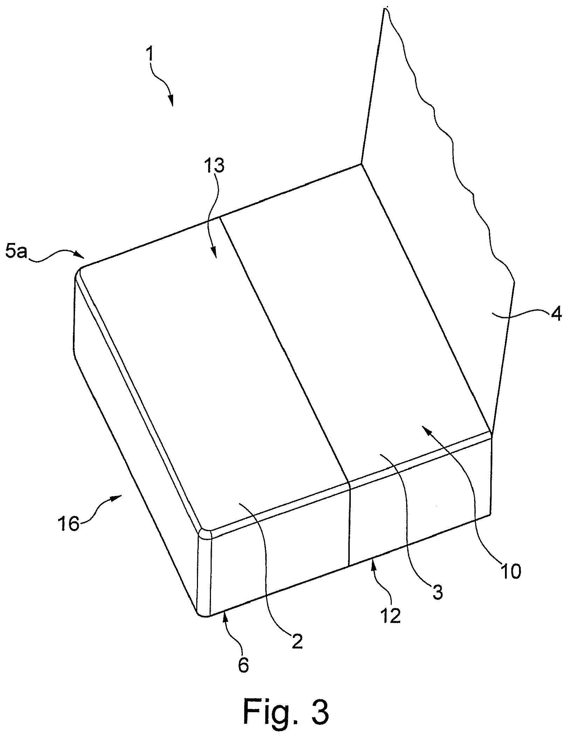

Diese Liegefläche 5 kann jedoch nicht ausreichend groß ausgebildet sein, beispielsweise wenn eine sehr große Person bzw. wenn mehrere Personen darauf Platz finden sollen. Hierzu sieht die Erfindung eine weitere Gebrauchsstellung, nämlich eine zweite Gebrauchsstellung (siehe Figur 3) vor, in welcher eine gegenüber der ersten Gebrauchsstellung 14 vergrößerte Liegefläche 5 vorliegt. Das erste Matratzenelement 2 und das zweite Matratzenelement 3 sind hierzu derart miteinander gelenkig verbunden, dass eine entsprechend vergrößerte Liegefläche (siehe Figur 3) mittels einer Klapp- oder Schwenkbewegung der Matratzenelemente 2, 3 zueinander zu einer zweiten Gebrauchsstellung 16 bereitgestellt wird. Im Ausführungsbeispiel umfasst das erste Matratzenelement 2 als gelenkige Verbindung zwischen den Matratzenelementen 2, 3 eine stoffscharnierartige Schicht 17, die mit einem Bereich einer Stirnseite 7 des zweiten Matratzenelements 3 verbunden ist.

Figur 3 zeigt die Liegevorrichtung 1 in einer zweiten Gebrauchsstellung 16. Es ist ersichtlich, dass die Liegefläche 5a, die sich aus den Oberseiten 13, 10 der Matratzenelemente 2, 3 zusammensetzt, gegenüber der Liegefläche in der ersten Gebrauchsstellung (siehe Figur 2) vergrößert ist. Diese Vergrößerung der Liegefläche wird dadurch ermöglicht, dass erstes Matratzenelement 2 und zweites Matratzenelement 3 miteinander gelenkig verbunden sind und dass Matratzenelemente 2, 3 somit relativ zueinander klapp- oder schwenkbar sind.

### Bezugszeichenliste:

- 1: Liegevorrichtung
- 2: erstes Matratzenelement
- 3: zweites Matratzenelement
- 4: Fahrzeugwand
- 5: Liegefläche
- 5a: Liegefläche
- 6: Oberseite (des ersten Matratzenelements)
- 7: Stirnseite (des zweiten Matratzenelements)
- 8: nicht vergeben
- 9: nicht vergeben
- 10: Oberseite (des zweiten Matratzenelements)
- 11: Stützmittel
- 11a: Stützmittel
- 12: Unterseite (des zweiten Matratzenelements)
- 13: Unterseite (des ersten Matratzenelements)
- 14: erste Gebrauchsstellung
- 15: Ruhestellung
- 16: zweite Gebrauchsstellung
- 17: Schicht

## Patentansprüche

1. Liegevorrichtung (1) für ein Fahrzeug, insbesondere Wohnmobil, Wohnwagen oder dergleichen, umfassend ein erstes Matratzenelement (2) und ein zweites Matratzenelement (3), wobei die Liegevorrichtung (1) in einer Ruhestellung (15) an einer Fahrzeugwand (4) anordenbar und zur Verwendung in eine erste Gebrauchsstellung (14) relativ zu der Fahrzeugwand (4) schwenkbar ist,
**dadurch gekennzeichnet, dass**
das erste Matratzenelement (2) und das zweite Matratzenelement (3) derart miteinander gelenkig verbunden sind, dass eine Liegefläche (5a) mittels einer Klapp- oder Schwenkbewegung der Matratzenelemente (2, 3) zueinander zu einer zweiten Gebrauchsstellung (16) vergrößerbar ist.

2. Liegevorrichtung nach Anspruch 1, **dadurch gekennzeichnet, dass** in einer ersten Gebrauchsstellung (14) wenigstens ein Bereich einer Oberseite (6) des ersten Matratzenelements (2) wenigstens eine stoffscharnierartige Schicht (17) umfasst, welche zumindest mit einem Bereich einer Stirnseite (7) des zweiten Matratzenelements (3) verbunden, insbesondere verklebt ist.

3. Liegevorrichtung nach einem der vorangehenden Ansprüche,
**dadurch gekennzeichnet, dass** das erste Matratzenelement (2) vorzugsweise lösbar mit dem zweiten Matratzenelement (3), insbesondere über eine Klettverbindung und/oder über einen Reißverschluss und/oder über eine Kederverbindung, verbunden ist.

4. Liegevorrichtung nach einem der vorangehenden Ansprüche, **dadurch gekennzeichnet, dass** wenigstens ein Stützmittel (11, 11a) vorgesehen ist, auf welchem in einer ersten Gebrauchsstellung (14) und/oder in einer zweiten Gebrauchsstellung (16) wenigstens das zweite Matratzenelement (3) auflegbar ist.

5. Liegevorrichtung nach einem der vorangehenden Ansprüche,
**dadurch gekennzeichnet, dass** eine Unterseite (12) des zweiten Matratzenelements (3) eine Dekorschicht vorzugsweise aus Holzwerkstoff umfasst.

6. Liegevorrichtung nach Anspruch 4, **dadurch gekennzeichnet, dass** das wenigstens eine Stützmittel (11) horizontal schwenkbar ausgebildet ist.

7. Liegevorrichtung nach einem der vorangehenden Ansprüche,
**dadurch gekennzeichnet, dass** in einer zweiten Gebrauchsstellung (16) eine Oberseite (6) des ersten Matratzenelements (2) auf wenigstens einem Stützmittel (11) auflegbar ist, wodurch eine Unterseite (13) des ersten Matratzenelements (2) als Liegefläche (5a) nutzbar ist.

8. Fahrzeug, insbesondere Wohnmobil, Wohnwagen oder dergleichen Reise- und/oder Freizeitfahrzeug,
**dadurch gekennzeichnet, dass** wenigstens eine Liegevorrichtung vorgesehen ist, die nach wenigstens einem der Ansprüche 1 bis 7 ausgebildet ist.
